# EUROPEAN PATENT APPLICATION

(11) **EP 4 233 557 A2**
(43) Date of publication of application: **30.08.2023**
(21) Application number: 23167491.2
(22) Date of filing: 31.10.2019
(51) Int. Cl.: A23L 11/00, A23J 3/22, A23L 19/15, A23L 25/00, A23L 33/105, A23L 33/185

(54) **A PROCESS FOR MAKING A PLANT BASED PRODUCT**

(30) Priority: 01.11.2018 US 201862754306 P
(62) Divisional of application: 19798571.6
(71) Applicant: Société des Produits Nestlé S.A., 1800 Vevey (CH)
(72) Inventor: FERNANDEZ FARRES, Isabel, CH-1012 LAUSANNE (CH); RADE-KUKIC, Koraljka, Lafayette, 94549 (US); WOO, Kyungsoo, Broadview Heights, 44147 (US)
(74) Representative: Slaven, John William

(57) **Abstract**

The present invention relates to a process for making a plant-based product, comprising mixing vegetables, legumes and/or cereals and optionally a plant extract, preparing a binding agent by mixing dietary fibre and protein, mixing the vegetables, legumes and/or cereals and binding agent, and optionally plant extract, and molding into a shape. A plant-based product obtained by the process of the invention is also provided.

## Description

### Background

Almost all commercially available vegetarian plant-based products such as vegetable burgers, patties, schnitzels, balls or similar currently use egg white, while vegan options use methylcellulose, gum blends or other additives for achieving optimal binding properties.

Methylcellulose (MC) is the simplest cellulose derivative. Methyl groups (-CH3) replace the naturally occurring hydroxyls at the C-2, C-3 and/or C-6 positions of the cellulose anhydro-D-glucose units. Typically, commercial MC is produced via alkaline treatment (NaOH) for swelling cellulosic fibres to form an alkali-cellulose which would then react with an etherifying agent such as chloromethane, iodomethane or dimethyl sulfate. Acetone, toluene, or isopropanol can also sometimes be added, after the etherifying agent, for tailoring the final degree of methylation. As a result, MC has amphiphilic properties and exhibits a unique thermal behavior which is not found in naturally occurring polysaccharide structures i.e. it gels upon heating.

Gelation is a two step process in which a first step is mainly driven by hydrophobic interactions between highly methylated residues, and then a second step which is a phase separation occurring at T > 60 °C with formation of a turbid strong solid-like material. This gelation behavior upon heating of MC is responsible for the unique performance in cook from raw burgers when shape retention is required upon cooking. It is similar to the performance of an egg white binder.

However, consumers are becoming increasingly concerned about undesirable chemically modified ingredients in their products. Existing solutions for replacing MC involve the use of other additives in combination with other ingredients for achieving desired functionality. Some of those additives also undergo chemical modification during manufacturing to achieve desired functionality.

Carbohydrate based binders can be based on calcium-alginate gels. In order to achieve gelation, a slow acid release (from either glucono-delta-lactone, citric acid, lactic acid) is needed to liberate calcium ions for crosslinking with alginate to form the gel. This process is rather complex to use in application and the functionality is limited to strong, firm gels hence applicable only for specific plant-based products.

The use of starch-based binders has a detrimental effect on texture, leading to products with a mushy sensory perception which also crumbles when it is cooked. In addition, starches and flours are high glycemic carbohydrates, which might be not desired or recommended for specific consumer populations (e.g. diabetics or those wishing to limit carbohydrate content).

Almost all plant-based products on the market comprise an additive as part of the binding agent solution.

Due to all those deficiencies, there are nowadays not many vegan plant-based products that are acceptable for consumers in terms of optimal textural attributes and a more label-friendly, natural ingredient list.

There is a clear need for a plant-based, label-friendly, natural binding agent as an analogue to egg white and MC with enhanced functional properties.

### Summary of invention

The present invention relates to plant-based products having a plant-based, clean label, natural binding agent as a substitute for egg white and methylcellulose and its derivatives (e.g. hydroxypropyl-methylcellulose) in food applications.

The inventors of the present application have surprisingly found a fibre and protein combination that, when mixed under specific conditions in a plant-based product gives a binder or binding agent which has similar functional properties to egg white or methylcellulose. The functional properties refer to binding the plant-based product in cold or room temperature conditions (prior to cooking), hence enabling optimal molding and shape retention during storage while not crumbling on cooking due to the formation of firm gel.

The texture of the product is improved versus alternative binders such as hydrocolloids (e.g. alginate, agar, konjac gum) which tend to give gummy mouthfeel and starches which are perceived as mushy and have the perception of being uncooked. Also, it avoids the use of starch which leads to an undesirable crust formation.

Moreover, the fibre and protein combination when used as a binding agent does not exhibit water leakage during storage of the plant-based product in the cold. Compared to burgers with binding agents comprising methylcellulose or other hydrocolloids, no water leakage was observed after a 2 week storage period. This is due to the fact that fibres also comprise an insoluble fraction that can bind water via capillary, hence water retention capacity is higher compared to those hydrocolloids that behave as a purely polymer melt.

The present invention relates in general to a process for making a plant-based product, comprising mixing vegetables, legumes and/or cereals and dietary fibre, protein, and optionally plant extract.

The present invention further relates to a process for making a plant-based product, comprising mixing vegetables, legumes and/or cereals and optionally a plant extract, preparing a binding agent by mixing dietary fibre and protein, mixing the vegetables, legumes and/or cereals and binding agent, and optionally plant extract, and molding into a shape.

The present invention relates to a process for making a plant-based product, comprising
a. Optionally hydrating a plant extract, preferably by mixing with water;
b. Preparing a binding agent by mixing dietary fibre, and plant protein;
c. Mixing the binding agent, and optionally plant extract, with vegetables, legumes and/or cereals; and
d. Molding into a shape.
e. Cooking and freezing

In particular, the present invention relates to a process for making a plant-based product, comprising
a. Mixing 0 wt% to 20 wt% plant extract with water;
b. Preparing a binding agent by mixing 0.1 wt% to 10 wt% dietary fibre and 0.3 wt% to 10 wt% plant protein;
c. Optionally adding flavor, fat or oil and colorings;
d. Mixing the binding agent, and optionally hydrated plant extract with vegetables, legumes and/or cereals;
e. Molding into a shape; and
f. Cooking and freezing

In one embodiment, 10 wt% to 95 wt%, or 20 wt% to 95 wt%, or 40 wt% to 95 wt%, or 45 wt% to 95 wt%, or 45 wt% to 85 wt%, or 50 wt% to 80 wt%, or 55 wt% to 75 wt%, or 60 wt% to 75 wt%, 64 wt% to 67 wt%, or about 65 wt% vegetables, legumes and/or cereals are mixed.

In one embodiment, vegetables, legumes and/or cereals are replaced by fruits, tubers, cereals, seeds, oilseeds and/or nuts.

In one embodiment, 0.5 wt% to 20 wt% plant extract is mixed with water, preferably about 2 wt% to 15 wt% plant extract, more preferably about 4.5 wt%.

In one embodiment, the plant extract is derived from legumes, cereals,f or oilseeds.

In one embodiment, the plant extract is derived from soy, pea, wheat or sunflower.

In one embodiment, the plant extract is textured protein preferably made by extrusion.

In one embodiment, the plant extract comprises soy or pea, preferably textured soy or textured pea, preferably made by extrusion.

In one embodiment, the dietary fiber at 5 wt. % in aqueous solution at 20°C exhibits the following viscoelastic properties 1) shear thinning behavior with zero shear rate viscosity above 8 Pa.s and 2) G' (storage modulus) greater than 65 Pa and G" (loss modulus) lower than 25Pa of at 1Hz frequency.

In one embodiment, about 0.5 wt% to about 46wt% dietary fibre is mixed, preferably about 1-5 wt% fibre is mixed.

In one embodiment, not less than 30 wt% of the dietary fibre is soluble, preferably 50 wt% to 70 wt% of the dietary fiber is soluble, preferably about 60 wt%. of the dietary fiber is soluble

In one embodiment, not less than 20 wt% of the soluble fibre is pectic polysaccharide, preferably not less than 40%.

In one embodiment, the dietary fibre is derived from tubers, for example potato, cassava, yam, or sweet potato.

In one embodiment, the dietary fibre is derived from vegetables, for example carrot, pumpkin, or squash.

In one embodiment, the dietary fibre is derived from fruit, for example citrus fruit.

In one embodiment, the dietary fibre is derived from legumes, for example pulses.

In one embodiment, the dietary fibre is derived from oilseeds, for example flaxseed.

The dietary fiber can be derived from potato, apple, psyllium, fenugreek, chickpea, carrot, flaxseeds or citrus fruit.

In one embodiment, the dietary fibre is derived from potato, fenugreek, citrus, or psyllium.

In one embodiment, the dietary fiber comprises potato fibre. In one embodiment, the fiber is derived from potato and psyllium, for example Hi Fibre 115.

In one embodiment, about 0.5 wt% to about 10 wt% plant protein is mixed, or dry mixed.

In one embodiment, about 0.5 wt% to about 6 wt% plant protein is mixed, or dry mixed.

In one embodiment, about 1 wt% to about 5 wt% plant protein is mixed, or dry mixed.

In one embodiment, the plant protein gels upon heating at a temperature at or above 50°C. The person skilled in the art will know that minimal gelling concentration of a protein depends on pH, ionic strength and heating kinetics.

For example, a potato protein heated for about 30 minutes at 70°C may gel at 3% at pH 7, while in the presence of 10mM NaCl, the same protein can also gel at 2% concentration under the same conditions.

In one embodiment, the plant protein is at least partially native.

In one embodiment, the plant protein is potato protein

In one embodiment, the plant-based product is a burger, a patty, schnitzel, or a vegetable ball.

In one embodiment, the plant-based product is substantially free of hydrocolloids.

In one embodiment, the plant-based product is substantially free of modified starches.

In one embodiment, the plant-based product is substantially free of emulsifiers.

In one embodiment, the plant-based product is substantially free of additives

In one embodiment, a fat source and/or oil are added to the binding agent mixture and vegetables, legumes and/or cereals.

Also provided is a plant-based product obtainable by the process of the invention, wherein said product is a vegetable burger, vegetable patty, vegetable schnitzels, vegetable ball or similar.

Also provided is a plant-based product comprising
a. Vegetables, legumes and/or cereals
b. Optionally Plant extract;
b. Flavoring;
c. Fat; and
d. Binding agent
wherein the plant extract is selected from legumes, cereals, and oilseeds, and wherein the binding agent comprises 0.1 wt% to 10 wt% dietary fibre and 0.3 wt% to 10 wt% plant protein.

Also provided is a plant-based product comprising
a. Vegetables, legumes and/or cereals
c. Optionally Plant extract;
b. Flavoring;
c. Fat; and
d. Binding agent
wherein the plant extract is selected from legumes, cereals, and oilseeds, and wherein the binding agent comprises 0.1 wt% to 10 wt% dietary fibre and 0.3 wt% to 10 wt% plant protein.

In one embodiment, the vegetables, legumes and/or cereals are selected from carrots, onions, corn, peas and/or potatoes.

The vegetables, legumes and/or cereals can be in the form of cubes, chips or kernels.

In one embodiment, the plant extract is wheat gluten.

In one embodiment, the binding agent comprises more than 30% soluble fibre and plant protein.

In one embodiment, the binding agent comprises potato fibre and potato protein.

In one embodiment, the binding agent is substantially free of hydrocolloids.

The plant-based product may comprise 10 wt% to 95 wt%, or 20 wt% to 95 wt%, or 40 wt% to 95 wt%, or 45 wt% to 95 wt%, or 45 wt% to 85 wt%, or 50 wt% to 80 wt%, or 55 wt% to 75 wt%, or 60 wt% to 75 wt%, or 64 wt% to 67 wt%, or about 65 wt% vegetables, legumes and/or cereals.

Also provided is a plant-based product comprising: about 65 wt% vegetable, legumes and/or cereals, 0 wt% to 20wt% plant extract, preferably about 5 wt% wheat gluten as plant extract; about 1 wt% to 2 wt% potato fibre; about 1 wt% to 5 wt% potato protein; about 3 to 15 wt% fat source; water; flavouring; and salt.

In one embodiment, the plant-based product comprises about 2 wt% dietary fibre and about 3 wt% plant protein.

In one embodiment, the plant-based product comprises about 1 wt% dietary fibre and about 3 wt% plant protein.

In one embodiment, the plant-based product comprises about 1 wt% dietary fibre and about 4 wt% plant protein.

In one embodiment, the plant-based product comprises about 1 wt% dietary fibre and about 5 wt% plant protein.

Also provided is the use of a binding agent in a plant-based product, wherein the binding agent comprises 0.1 wt% to 10 wt% dietary fibre and 0.3 wt% to 10 wt% plant protein.

In one embodiment, the binding agent is substantially free of hydrocolloids.

In one embodiment, the binding agent is substantially free of modified starches.

In one embodiment, the binding agent is substantially free of emulsifiers.

In one embodiment, the plant protein is at least partially native.

In one embodiment, the binding agent comprises about 0.5 wt% to about 4 wt% dietary fibre.

In one embodiment, not less than 30 wt% of the dietary fibre is soluble, preferably 50 wt% to 70 wt% of the dietary fiber is soluble, preferably about 60 wt%. of the dietary fiber is soluble

In one embodiment, not less than 20 wt% of the soluble fibre is pectic polysaccharide, preferably not less than 40%.

In one embodiment, the dietary fibre is derived from tubers, for example potato, cassava, yam, or sweet potato.

In one embodiment, the dietary fibre is derived from vegetables, for example carrot, pumpkin, or squash.

In one embodiment, the dietary fibre is derived from fruit, for example citrus fruit.

In one embodiment, the dietary fibre is derived from legumes, for example pulses.

In one embodiment, the dietary fibre is derived from oilseeds, for example flaxseed.

The dietary fiber can be derived from potato, apple, psyllium, fenugreek, chickpea, carrot, flaxseeds or citrus fruit.

In one embodiment, the dietary fibre is derived from potato, fenugreek, citrus, or psyllium.

In one embodiment, the dietary fiber is potato fibre. In one embodiment, the dietary fiber is derived from potato and psyllium.

In one embodiment, the binding agent comprises about 0.5 wt% to about 5 wt% plant protein.

In one embodiment, the binding agent comprises about 2 wt% to about 4 wt% potato fibre and about 1 wt% to about 3 wt% potato protein.

In one embodiment, the plant-based product is substantially free of additives

In one embodiment, the plant-based product comprises a fat source and/or oil.

The plant-based product may be a vegetable burger, vegetable patty, vegetable schnitzels, vegetable ball or similar.

### Detailed description of the invention

### Plant fibre

In one embodiment, a Newtonian fluid behavior is observed at low concentrations when the plant fibre component of the binding agent is dispersed in water (below 1 wt%). In one embodiment, a shear thinning response becomes apparent at concentrations equal or above 1 wt% when dispersed in water.

A water based solution comprising 5 wt% of plant fibre at 20°C may exhibit the following viscoelastic properties (i) shear thinning behavior with zero shear rate viscosity above 8 Pa.s, and (ii) G' (storage modulus) greater than 65 Pa and G" (loss modulus) lower than 25Pa of at 1Hz frequency. Within the scope of this invention, the shear thinning is defined as any material that exhibits a decrease in viscosity with increasing shear rate or applied stress.

In one embodiment, modulus G' is greater than the modulus G" up to and including at least 100% of applied strain, at concentrations of 5 wt% when dispersed in water.

### Plant protein

In one embodiment, the plant protein component of the binding agent comprises proteins that form a gel upon heating above 50°C. The person skilled in the art knows that gelling is protein concentration and conditions dependent. In one embodiment, the binding agent comprises at least partially native proteins that have onset temperature for denaturation (Tₒₙₛₑₜ) in near neutral conditions and 10% protein (w/w) concentration at about 60 °C. In one embodiment, the endothermic peak of the plant protein component of the binding agent is between 60°C to 90°C, or 70°C to 80°C. This is important for gelling during cooking.

The preferred plant protein of the binding agent is potato protein.

### Method of making the plant-based product

The plant-based product of the invention can be made or prepared according to the following method: a) develop gluten with water, vinegar and ascorbic acid into a relaxed, viscous liquid like mass as described in US Patent 4938976 (Nestlé/Tivall); b) combine vegetable components c) combine all dries (protein/fibre mix, salt, flavoring,); d) mix developed gluten, vegetables, oil and dries until the ingredients are distributed equally); e); f) form patties and coat them with breadcrumbs; g) fry patties in oil at 178°C for 33s then grille at 610°C for 3.1 min and/or heat at 200°C for 4 min in an oven; g) freeze until usage; h) re-heat on hot plate (griddle) at about 175°C (about 350°F) for 10-12 min.

The plant -based product of the invention can be made or prepared according to the following method:
a) develop gluten with water, vinegar and ascorbic acid into a relaxed, viscous liquid like mass as described in US Patent 4938976 (Nestlé/Tivall); b) combine vegetable components; c) make an emulsion by mixing water, plant protein powder and oil; d) combine remaining dries (fibre, salt, flavoring); e) mix developed gluten, vegetables, emulsion and dries until the ingredients are distributed equally; f) form patties and coat them with breadcrumbs; g) fry patties in oil at 178°C for 33s then grille at 610°C for 3.1 min and/or heat at 200°C for 4 min in an oven; g) freeze until usage; h) re-heat on hot plate (griddle) at about 175°C (about 350°F) for 10-12 min.

### Definitions

As used herein and in the appended claims, the singular form of a word includes the plural, unless the context clearly dictates otherwise. Thus, the references "a," "an" and "the" are generally inclusive of the plurals of the respective terms. For example, reference to "an ingredient" or "a method" includes a plurality of such "ingredients" or "methods." The term "and/or" used in the context of "X and/or Y" should be interpreted as "X", or "Y", or "X and Y." "X and either Y and/or Z" should be interpreted as "X and Y", or "X and Z", or "X and Y and Z". "X, Y and/or Z" should be interpreted as "X", "Y", "Z", "X and Y", "X and Z", "Y and Z", or "X and Y and Z".

The term "wt%" used in the entire description below refers to total weight % of the final product. The final composition included water unless specified. The recipes in the examples show an illustration of how wt% is to be understood by the skilled person in the art.

As used herein, "about," "approximately" and "substantially" are understood to refer to numbers in a range of numerals, for example the range of -40% to +40% of the referenced number, more preferably the range of -20% to +20% of the referenced number, more preferably the range of -10% to +10% of the referenced number, more preferably -5% to +5% of the referenced number, more preferably -1% to +1% of the referenced number, most preferably -0.1% to +0.1% of the referenced number. All numerical ranges herein should be understood to include all integers, whole or fractions, within the range. Moreover, these numerical ranges should be construed as providing support for a claim directed to any number or subset of numbers in that range. For example, a disclosure of from 1 to 10 should be construed as supporting a range of from 1 to 8, from 3 to 7, from 1 to 9, from 3.6 to 4.6, from 3.5 to 9.9, and so forth.

The term "additive" includes one or more of modified starches, hydrocolloids (e.g. carboxymethylcellulose, methylcellulose, hydroxypropylmethylcellulose, konjac gum, carragenans, xanthan gum, gellan gum, locust bean gum, alginates, agar, gum arabic, gelatin, Karaya gum, Cassia gum, microcrystalline cellulose, ethylcellulose); emulsifiers (e.g. lecithin, mono and diglycerides, PGPR); whitening agents (e.g. titanium dioxide); plasticizers (e.g. glycerine); anti-caking agents (e.g. silicon-dioxide).

The terms "food", "food product" and "food composition" mean a product or composition that is intended for ingestion by an animal, including a human, and provides at least one nutrient to the animal or human. The present disclosure is not limited to a specific animal.

A "plant-based product" is a product which typically comprises vegetables, fruits, tubers, legumes, cereals, seeds, oilseeds and/or nuts.

The term "cereals" includes wheat, rice, maize, barley, sorghum, millet, oats, rye, triticale, fonio and pseudocereals (e.g. amaranth, breadut, buckwheat, chia, cockscomb, pitseed goosefoot, qaniwa, quinoa, and wattleseed).

The term "plant protein" includes "plant protein isolates" or "plant protein concentrates" or combination thereof. The person skilled in the art knows how to calculate the amount of plant protein within a plant protein concentrate or plant protein isolate.

The term "binder" or "binding agent" as used herein relates to a substance for holding together particles and/or fibres in a cohesive mass. It is an edible substance that in the final product is used to trap components of the foodstuff with a matrix for the purpose of forming a cohesive product and/or for thickening the product. Binding agents of the invention may contribute to a smoother product texture, add body to a product, help retain moisture and/or assist in maintaining cohesive product shape; for example by aiding particles to agglomerate.

The term "fibre" or "dietary fibre" relates to a plant-based ingredient that is not completely digestible by enzymes in the human gut system. The term may comprise plant based fibre-rich fraction obtained from vegetables, seeds, fruits, nuts, pulses. The dietary fibre may comprise cellulose, hemicellulose, pectin, B-glucans, arabinoxylans, galactomannans, mucilages and lignin. In one embodiment, the dietary fibre is a fibre with a soluble polysaccharide fraction greater than 30 wt%. In one embodiment, the soluble polysaccharide fraction comprising pectins as main polysaccharide component of the soluble fraction and may contain residual starch and protein.. In one embodiment, the soluble fraction comprises arabinoxylans. In one embodiment, the dietary fibre can be derived from potato, apple, psyllium, fenugreek or citrus. The dietary fibre of the invention typically exhibits the fibre rheology characteristics in water based solutions shown below.

The term "plant extract" as used herein refers to textured protein or protein added to the plant-based product for purpose other than as a part of the binding system. Plant extract can be derived from legumes, cereals, oilseeds, or nuts. In one embodiment, the textured protein is made by extrusion and is preferably derived from soy, pea or wheat. This can cause a change in the structure of the protein which results in a fibrous, spongy matrix. The textured protein can be dehydrated or non-dehydrated. In its dehydrated form, textured protein can have a shelf life of longer than a year, but will spoil within several days after being hydrated. In one embodiment plant extract is gluten and is textured by mixing with water, vinegar and ascorbic acid into a relaxed, viscous liquid like mass as described in US Patent 4938976 (Nestl6/Tivall).

### Brief description of figures

**Figure 1****.** Apparent viscosity (Pa.s) of potato fibre water dispersions as a function of shear rate (s⁻¹) at a range concentrations, at 20°C.
**Figure 2****.** Strain sweeps for 5 wt% potato fibre water dispersions, measured at constant Frequency of 1 Hz, at 20°C.
**Figure 3****.** Mechanical spectra of potato protein gel (PP1) and ovalbumin (OA) gel obtained after heating protein dispersion at 3 wt% and 4 wt% at 85°C for 15 min in presence of NaCl 0.1M. Filled symbols correspond to elastic modulus G' and empty symbols to storage modulus G". Key: dark squares - PP1 (4 wt%); light squares - OA (4 wt%); light triangles - PP1 (3 wt%); and dark triangles - OA (3 wt%).
**Figure 4****.** G' as function of temperature for 6%, 14% potato protein solutions (pH 6).

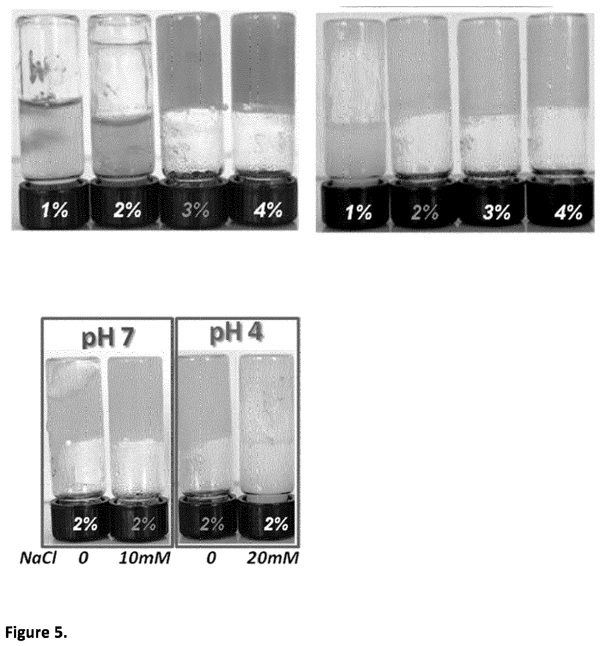

**Figure 5****.** Minimal gelling concentration determination of potato protein isolate at pH 7, heated 30' at 70°C, Minimal gelling concentration is indicated by gray number. The value considered as the minimal gelling concentration is the concentration where the sample stayed at the bottom of the vial (i.e. did not slide down), when they were turned upside down.
   2% potato protein dispersions heated 30' at 70°C at pH 7 or 4, alone or in the in the presence of various concentrations of NaCl (indicated below the picture). Gels are indicated by the grey number. Gel is considered where vial the sample stayed at the bottom of the vial (i.e. did not slide down), when they were turned upside down.

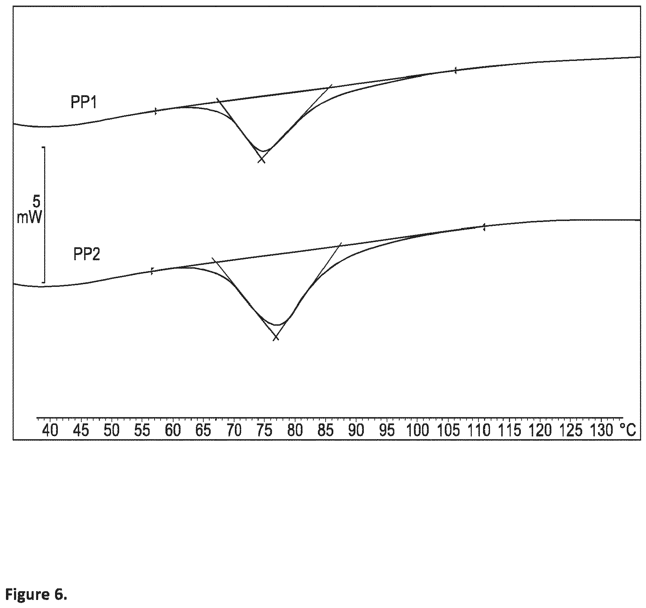

**Figure 6****.** DSC thermogram of two potato protein isolates (PP1 and PP2).

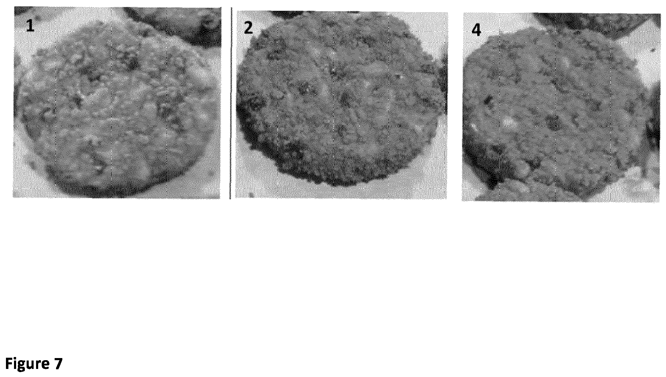

**Figure 7****.** Images of samples 1, 2 and 4 from the Example 4.

### EXAMPLES

### Example 1: Rheological behavior of potato fibre

Potato fibres (Hi Fibre 115, according to supplier specification comprises about 92% total fibre, about 2% protein, wherein 98% of the ingredient is derived from potato source and about 2% of the ingredient is derived from soluble psyllium husk) were selected based on their rheological response when dispersed in water. The desired functionality from the fibre is mostly related to binding of the vegetable pieces, hence enabling molding into desired shape that does not crumble as well as preventing water leakage during cold storage.

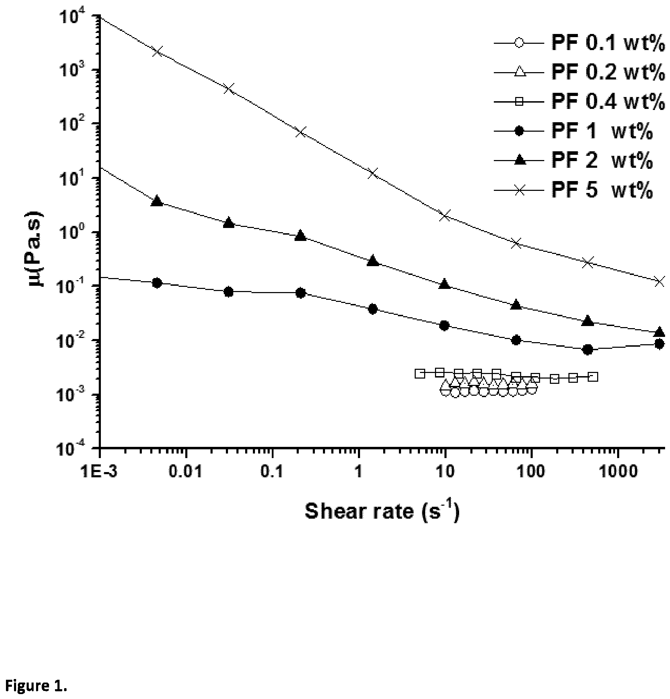

Figure 1 shows shear viscosity of potato fibre dispersions at a range of concentrations. A Newtonian fluid behavior is observed at low concentrations (below 1 wt%) whereas a shear thinning response becomes apparent at concentrations equal or above 1 wt%. The onset concentration for shear thinning response for this potato fibre is rather low compared to fibres comprising large amounts of insoluble polysaccharides (e.g. cellulose, hemicellulose). This is mainly due to the increased amount of soluble, high molecular polysaccharide chains from the potato fibre (primarily galacturtonic and glucuronic type, but also glucans, mannoses, xyloses, rhamonoses and arabinoses) which are solubilized in the water continuous phase and hence occupy large hydrodynamic volumes.

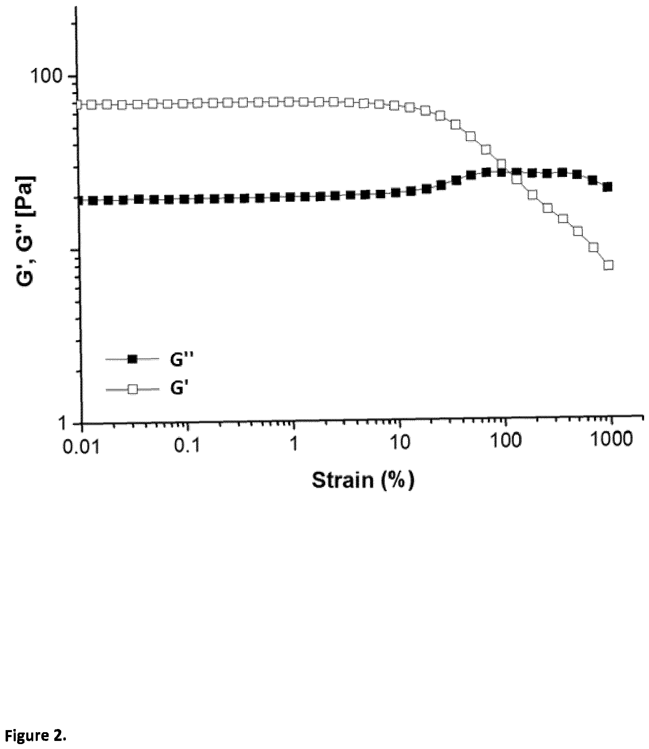

The viscoelastic properties of 5 wt% potato fibre water dispersions are shown in Figure 2, with G' being significantly greater than G" and constant over wide range of applied strain (corresponding to the linear viscoelastic region) until the microstructure breaks down and the material yields. The fact that potato fibre dispersions show G' > G" indicates the dominant solid-like response over the applied strain ranges, which is attributed to the chain entanglement between the previously mentioned polysaccharides that are solubilized in the water-continuous phase. The insoluble fibre fraction of the potato fibre is acting as a filler, with less contribution to the viscoelastic response of the fibre suspension.

This particular viscoelastic response is not measured when fibres with greater insoluble fraction (comprising primarily cellulose, hemicellulose, and lining) are used at the same concentration. Those fibres behave as particulate dispersions in which insoluble fibre particles have the tendency to sediment thereby displaying lower viscosity values and without any elastic contribution at equal concentration ranges. For these insoluble fibre rich ingredients, increased concentrations are needed for the particulate dispersions to exhibit solid-like behavior. This occurs when the suspensions are densely packed, with an effective phase volume greater than their maximum packing fraction which leads to solid-like linear viscoelastic response that exhibits flows only if a sufficient shear stress is applied (i.e. the yield stress).

### Example 2: Rheological properties of potato protein gels

### Mechanical spectra of potato protein gels

Gelling properties of potato protein isolate PP1 from a commercial source and ovalbumin from a commercial source were compared using small deformation rheology. Gelation of protein dispersion was performed in situ in an Paar Physica MCR501 (Anton Paar Ostfildern, Germany) stress-controlled rheometer, using a concentric cylinder setup (inner and outer cylinder are 8.33 and 9.04 mm respectively). The rheomether was equipped with a Peltier heating and cooling device. Protein dispersion was placed in the geometry and a thin layer of paraffin oil was carefully placed on top to prevent evaporation during the experiment.

The temperature was raised from 20 °C to 85 °C at 5 °C/min. After 15 minutes holding at 85 °C, the temperature was decreased to 20 °C at -5 °C/min. After reaching 20 °C, the system was left to equilibrate at 0.05% strain and 1 Hz for 10 minutes. A frequency sweep was subsequently performed.

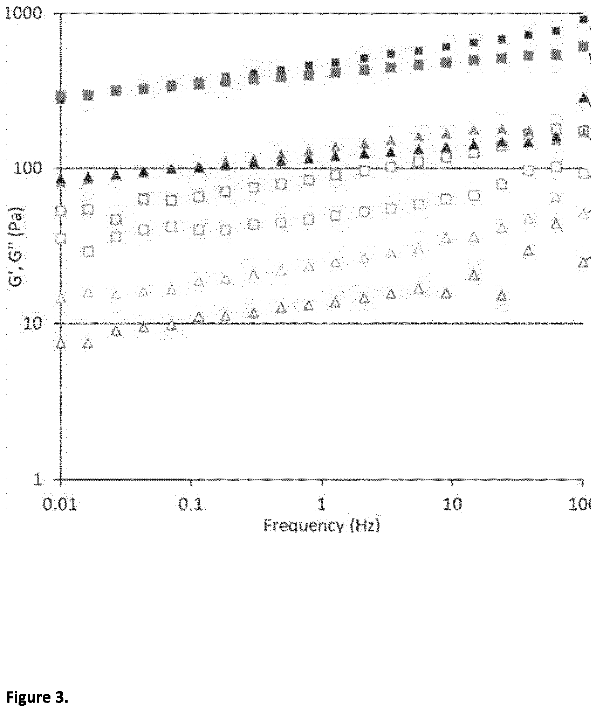

Figure 3 shows the mechanical spectra obtained after cooling. All systems formed strong gels with G' value being higher than G" over the whole frequency range with a decade of difference between the two moduli.

Interestingly this first screening showed that similar profiles were obtained for PP1 and Ovalbumin at 3 wt% and 4 wt% protein in the presence of 0.1M NaCl suggesting similar gel strengths.

*G' for 6%, 14% potato protein solutions as function of temperature, at pH= 6.*

A solution of potato protein was prepared by dispersing the protein in a degassed water and stirring overnight. The pH was adjusted to pH of 6 using a solution of HCl.

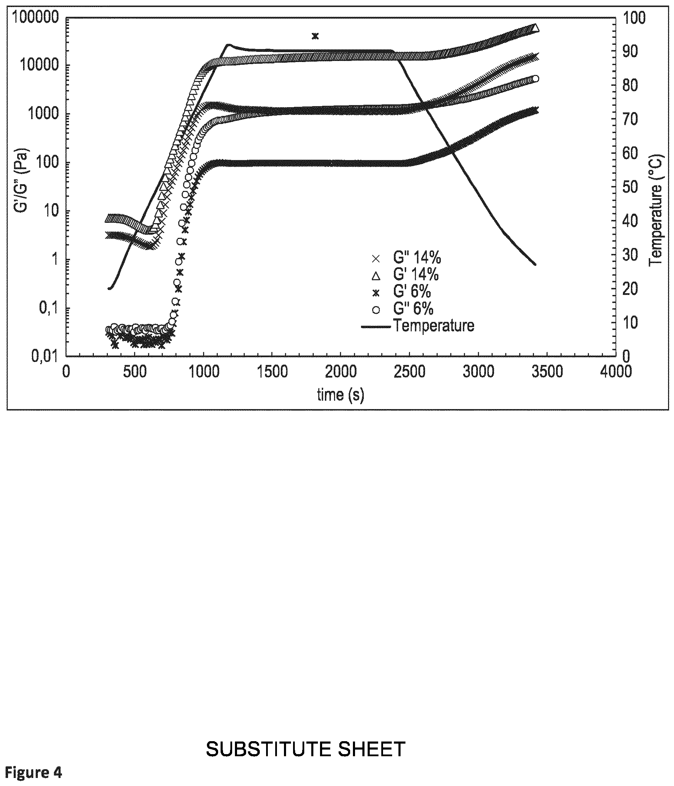

Evolution of G' was measured as function of temperature in stress-controlled rheometer (MCR 502, Anton Paar) with a sandblasted concentric cylinder geometry. Samples were placed and left to stabilize for 5 minutes at 20°C. After that, the following heating/cooling sequence was applied: heating ramp from 20°C to 90°C at 5°C/min, holding at 90°C for 20 minutes, followed by cooling from 90°C to 20°C at 4°C/ min. Measurements were carried out at a constant strain of 0,5% and a constant frequency of 1Hz (Figure 4).

In order to prevent evaporation, the samples were covered using mineral oil during rheological measurements.

### Minimal gelling concentration of potato protein determination

Dispersions having increasing protein concentrations were prepared by dissolving corresponding amount of potato protein isolate in Millipore^{®} water. Subsequently pH was adjusted to 4 or 7 by using 1M and 2M HCl or NaOH. After preparation, 3 mL of each sample was transferred into a 4 mL glass vial with screw-cap and heated in a water bath without stirring. Samples were heated 30 minutes at at 70°C. After cooling on ice, the sol - gel transition of the samples was analysed using the 'tilting-test', i.e. vials with samples were turned upside down and when the sample stayed at the bottom of the vial (i.e. did not slide down), it was considered as a gel.

The minimal gelling concentration in the presence of 10mM NaCl at pH 7 decreased to 2% protein while at pH 4 20mM NaCl had negative impact on gel formation.

To test the influence of salt addition on minimal gelling concentration, 2M NaCl solution was prepared and added in different amounts to chosen protein dispersions to achieve 10mM and 20mM NaCl.

### Example 3: Denaturation temperature of potato protein isolates

Heating causes denaturation of proteins as a result of disruption of bonds that are involved in the formation and maintenance of the protein structure. Denaturation temperatures of potato protein isolates were determined by differential scanning calorimetry (DSC). Presence of endothermic peaks observed in thermograms (figure 6) suggest that both evaluated potato protein isolates (PP1 and PP2) contain native proteins that denature upon heating above 65°C.

### Example 4: Vegetable Schnitzel

Vegetable ingredients (carrot cubes, onion cubes, bell pepper cubes, corn kernels, potato chips and peas) were combined. Gluten was mixed in a Hobart mixer with water solution of vinegar and ascorbic acid. Vegetable mix, oil and dries (flavoring, egg white powder or HiFiber 115/potato protein binder) were added and mixed with gluten until the ingredients were distributed homogeneously. The matrix was then molded into patties and coated with breadcrumbs. Subsequently, product was fried in oil at 178°C for 33s, grilled at 610°C for 3.1 min and/or heated at 200°C for 4 min in an oven. Product was stored frozen before use.

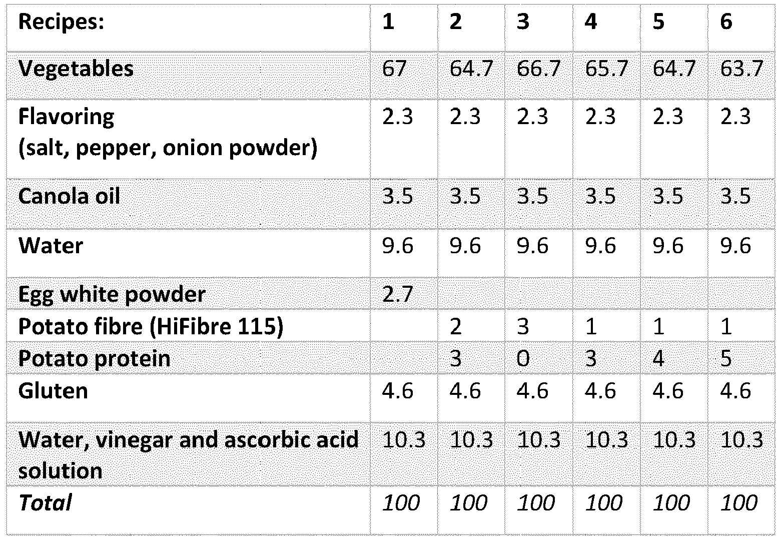

### (All values expressed in the above table are wt%)

All samples with HiFibre 115 and potato protein had sufficient cohesion between vegetable ingredients and provided enough stability for molding and cooking (figure 7). The sample where potato fibre was used alone, had crumbly texture after cooking and it was excluded from further consideration. In a technical tasting, the products prepared with the potato fibre / potato protein combinations showed preferable in-mouth texture without appreciable off-flavors. Samples with higher amount of potato protein (samples 5 and 6) had a firmer texture compared to other samples, including the control (sample 1).

## Claims

1. A process for making a plant-based product, comprising
a. Mixing 0 wt% to 20 wt% plant extract with water;
b. Preparing a binding agent by mixing 0.1 wt% to 10% wt% dietary fibre and 0.3 wt% to 10 wt% plant protein;
c. Optionally adding flavor, oil or fat and colorings;
d. Mixing the binding agent, and optionally hydrated plant extract with vegetables, legumes and/or cereals;
e. Molding into a shape; and
f. Optionally cooking and freezing
wherein the plant-based product is substantially free of hydrocolloids, modified starches and emulsifiers, and wherein not less than 30 wt% of the dietary fibre is soluble, preferably 50 wt% to 70 wt% of the dietary fibre is soluble, preferably about 60 wt%. of the dietary fibre is soluble.

2. A process for making a plant-based product, wherein the dietary fibre is derived from potato, apple, fenugreek, citrus, or psyllium.

3. A process for making a plant-based product according to claim 1 and 2, wherein plant derived ingredients are selected from vegetables, fruits, tubers, legumes, cereals, seeds, oilseeds and nuts.

4. A process for making a plant-based product according to claim 1 to 3, wherein about 4.5 wt% plant extract is mixed with water.

5. A process for making a plant-based product according to claims 1 to 4, wherein the plant extract is derived from legumes, cereals, or oilseeds.

6. A process for making a plant-based product according to claims 1 to 5, wherein about 0.5 wt% to about 4 wt% dietary fibre is mixed.

7. A process for making a plant-based product according to claims 1 to 6, wherein the dietary fiber at 5 wt. % in aqueous solution at 20°C exhibits the following viscoelastic properties 1) shear thinning behavior with zero shear rate viscosity above 8 Pa.s and 2) G' (storage modulus) greater than 65 Pa and G" (loss modulus) lower than 25Pa of at 1Hz frequency.

8. A process for making a plant-based product according to claims 1 to 7, wherein about 0.5 wt% to about 8 wt% plant protein is mixed, preferably about 1 wt% to about 6 wt% protein

9. A process for making a plant-based product according to claims 1 to 8, wherein the plant protein gels upon heating at a temperature at or above 50°C.

10. A process for making a plant-based product according to claims 1 to 9, wherein the plant protein is at least partially native.

11. A process for making a plant-based product according to claims 1 to 10, wherein the plant protein is potato protein.

12. A process for making a plant-based product according to claims 1 to 11, wherein the dietary fiber comprises potato fibre.

13. A process for making a plant-based product according to claims 1 to 12, wherein a fat source and/or oil are added to the vegetables, legumes and/or cereals, binding agent and optionally plant extract mixture.

14. A plant-based product obtainable by the process of claims 1 to 13, wherein said plant based product is a vegetable burger, vegetable patty, vegetable schnitzels, or vegetable ball.

15. A plant-based product comprising
a. Vegetables, legumes and/or cereals;
b. Optionally plant extract;
c. Optionally flavoring;
d. Optionally fat; and
e. Binding agent
wherein the plant derived ingredients are selected from vegetables, fruits, tubers, legumes, cereals, seeds, oilseeds and nuts, the plant extract is selected from soy, pea, wheat and sunflower, and wherein the binding agent comprises 0.1 wt% to 10 wt% dietary fibre and 0.3 wt% to 10 wt% plant protein, and wherein not less than 30 wt% of the dietary fibre is soluble.

16. A plant-based product according to claim 15, wherein the binding agent comprises potato fibre and potato protein.

17. A plant-based product according to claims 15 and 16, wherein the binding agent is substantially free of hydrocolloids.

18. Use of a binding agent in a plant-based product, wherein the binding agent comprises 0.1 wt% to 10 wt% potato fibre and 0.3 wt% to 10 wt% plant protein.

19. Use of a binding agent in a plant-based product according to claim 18, wherein the binding agent is substantially free of hydrocolloids.
